# EUROPEAN PATENT SPECIFICATION

(11) **EP 2 072 164 B1**
(45) Date of publication and mention of the grant of the patent: **29.10.2014**
(21) Application number: 08021886.0
(22) Date of filing: 17.12.2008
(51) Int. Cl.: B23D 35/00, B26D 7/26, B26D 1/24, B26D 7/08, B23D 19/06

(54) **Longitudinal shear for cutting a metallic ribbon**
Längsschere zum Schneiden eines Metallbands
Cisaillement longitudinal pour couper un ruban métallique

(30) Priority: 21.12.2007 IT MI20072408
(43) Date of publication of application: 24.06.2009
(73) Proprietor: Selema Srl, 20034 Giussano (MI) (IT)
(72) Inventor: Cozzi, Serafino, 20048 Carate Brianza (DE)

(56) References cited:
- EP-A- 0 575 265
- DE-A1- 3 632 779
- US-A- 2 698 661
- US-A- 2 784 783

## Description

The present invention refers to a longitudinal shear with circular blades for cutting a metallic ribbon.

A sheet metal slitter according to the preamble of claim 1 is known from US 2,698,661. The actual longitudinal shears show blades holder shafts much robust and rigid for maintain an high rigidity.

This in such a way to minimize the bending of the same during the cut of said metallic ribbon.

Now days the market requests longitudinal shears able to cut metallic ribbons more and more wider and therefore blades holder shafts more and more longer on which are assembled a plurality of couple of circular blades.

A disadvantage is that with the increasing of the width also increases the problem of the bending of the blades holder shafts, also in the absence of shear stresses.

A further disadvantage is that increasing the diameter of the blades holder shafts it increases also the weight of the same and therefore it increases further the bending of the same.

Besides caused by the bending of the blades holder shafts, the circular blades of each couple of blades show an overlap in radial direction which is different for each couple of blades.

In other terms each couple of blades show a different radial overlap.

Therefore being the circular blades of each couple of blades at different radial distances, consequently it will have different depth of cut.

Another disadvantage is that during the cut of said metallic ribbon some blades result to much distant and will not determinate the cut of said metallic ribbon same, while others blades will overlap exceedingly in radial direction determining the formation of burrs on said metallic ribbon.

Purpose of the present invention is to realize a longitudinal shear for cutting a metallic ribbon that can be able to avoid the formation of burrs during the cut of said metallic ribbon, maintaining a reduced weight and an encumbrance of the blades holder shafts.

Another purpose is to realize a longitudinal shear that permit to obtain a radial overlap substantially equal for all the couple of circular blades of said longitudinal shear.

Further another purpose is to have a longitudinal shear for cutting a metallic ribbon that permit a reduction of costs and times service.

Further purpose is to have a longitudinal shear for cutting a metallic ribbon that is economically advantageous.

These purposes according to the present invention are achieved by realizing a longitudinal shear for cutting a metallic ribbon as shown in claim 1.

Further features of the invention are pointed out in the following claims.

The features and the advantages of a longitudinal shear for cutting a metallic ribbon according to the present invention will appear more evident from the following, illustrative and not limitative description, referred to the attached schematic drawings in which:
figure 1 is a schematic partially sectioned raised lateral right side view of a preferred form of embodiment of a longitudinal shear for cutting a metallic ribbon according to the present invention;

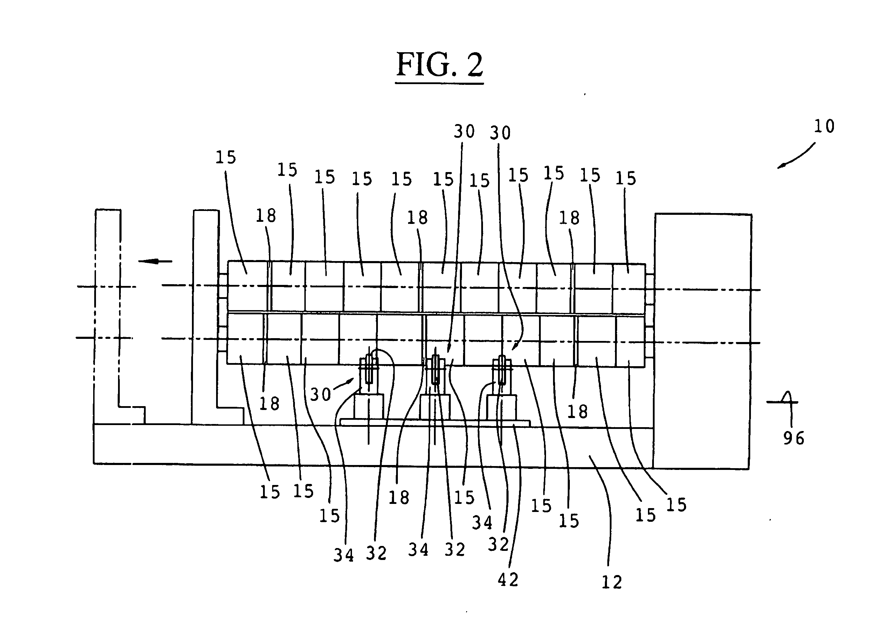

figure 2 is a schematic raised frontal view of the longitudinal shear of figure 1;

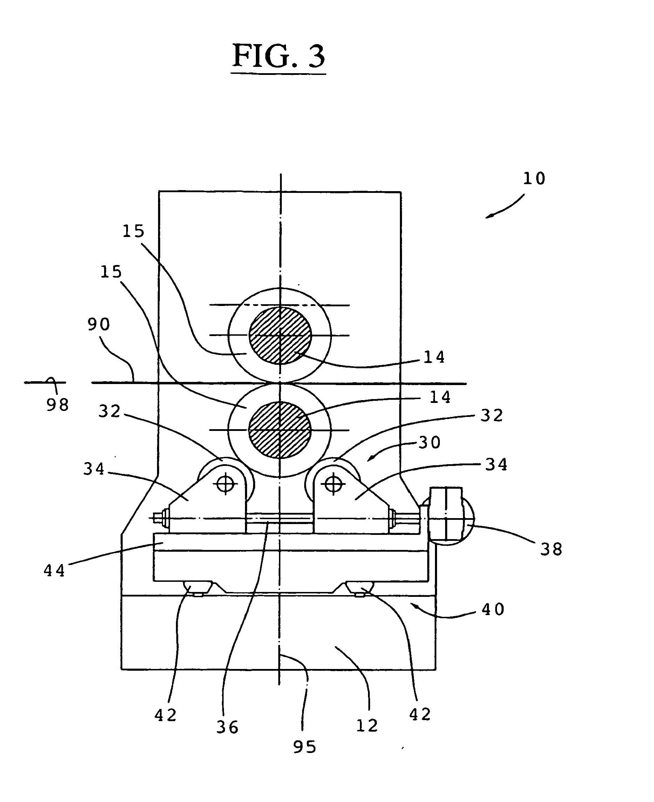

figure 3 is a schematic partially sectioned raised lateral right side view of a second preferred form of embodiment of a longitudinal shear for cutting a metallic ribbon according to the present invention;

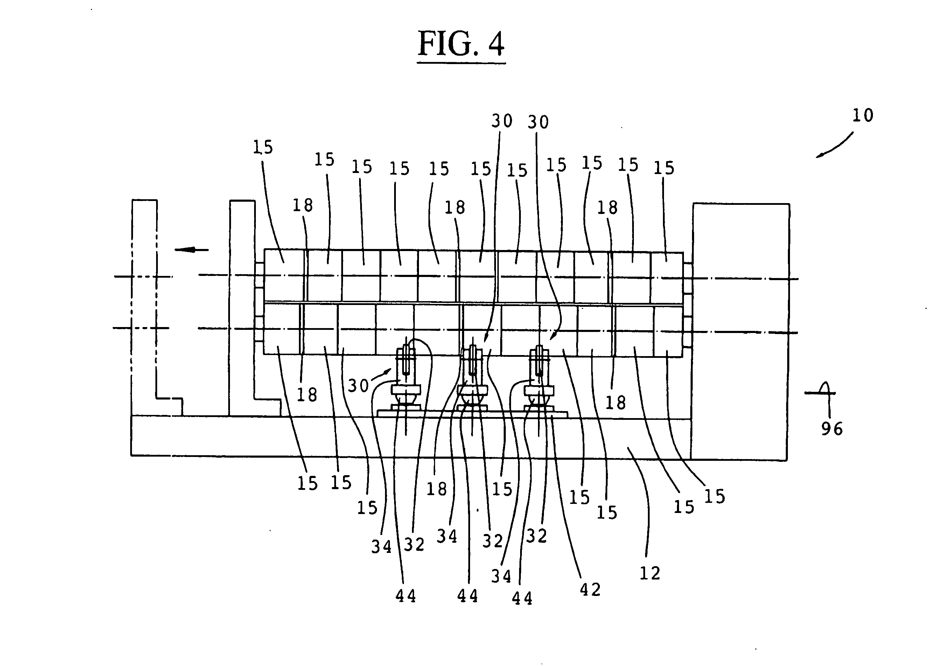

figure 4 is a schematic raised frontal view of the longitudinal shear of figure 3;

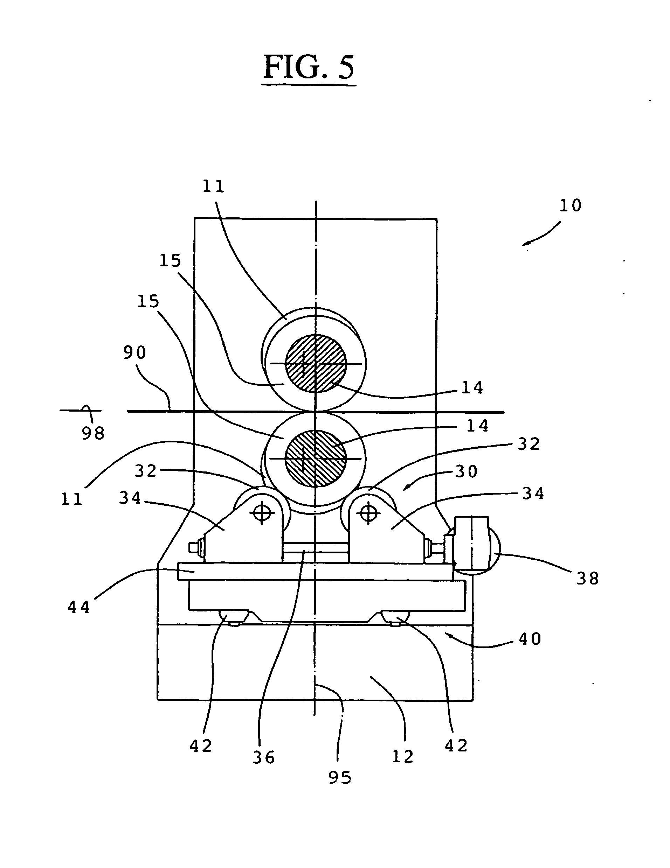

figure 5 is a schematic partially sectioned raised lateral right side view of a third preferred form of embodiment of a longitudinal shear for cutting a metallic ribbon according to the present invention;

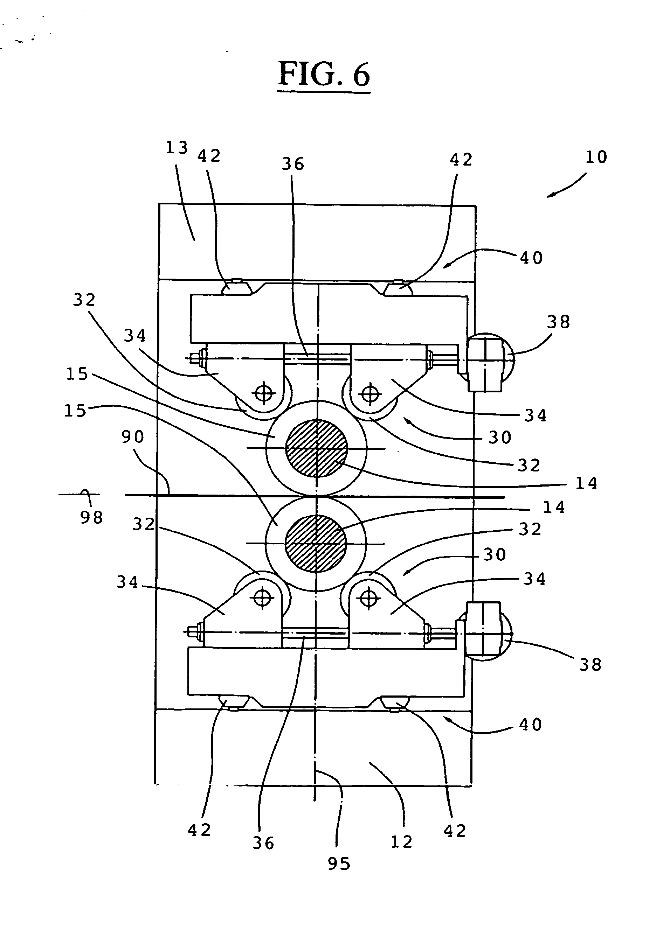

figure 6 is a schematic partially sectioned raised lateral right side view of a fourth preferred form of embodiment of a longitudinal shear for cutting a metallic ribbon according to the present invention;

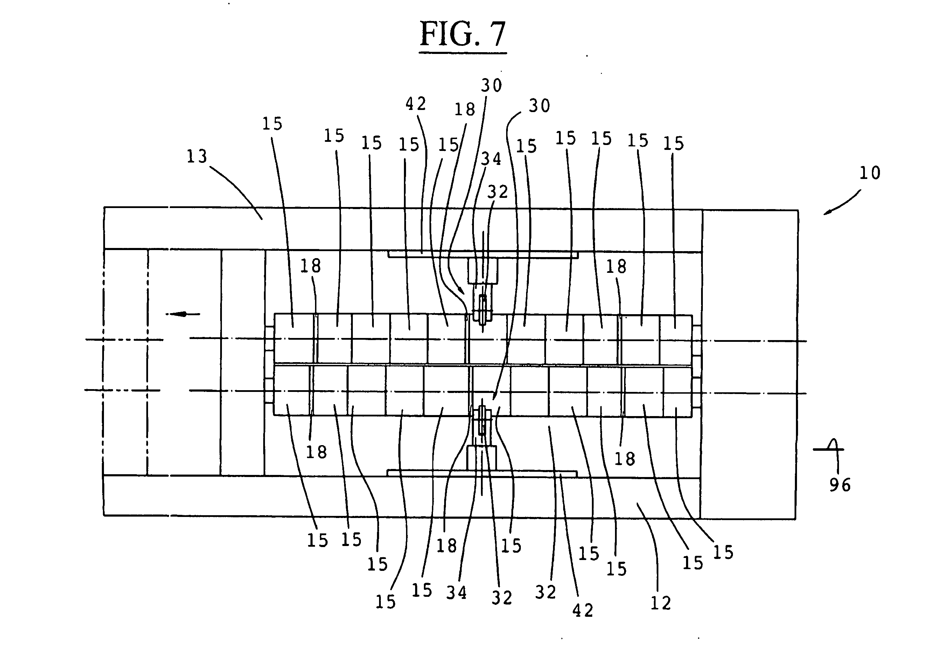

figure 7 is a schematic raised frontal view of the longitudinal shear of figure 6;

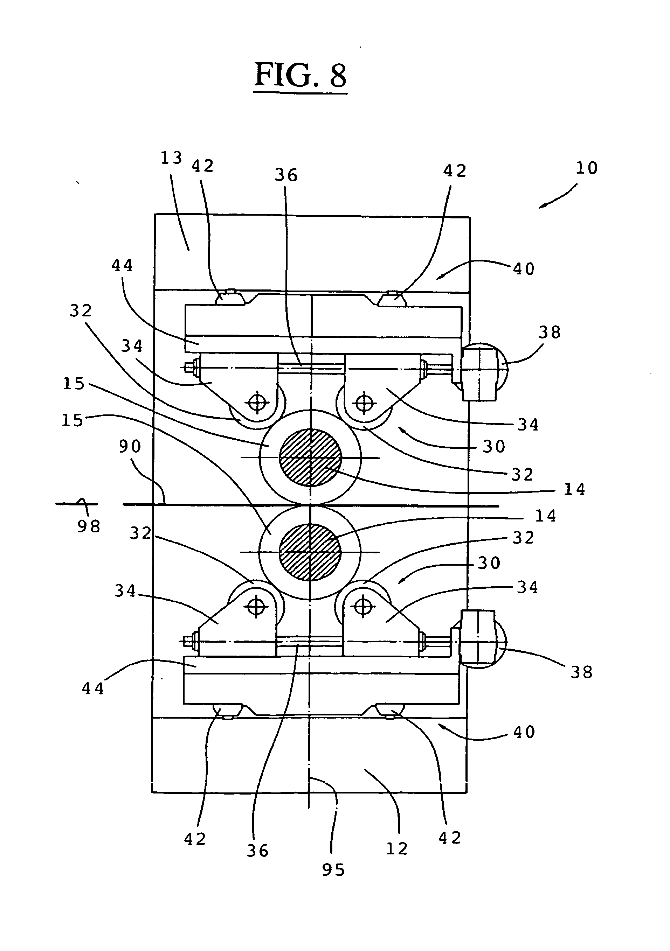

figure 8 is a schematic partially sectioned raised lateral right side view of a fifth preferred form of embodiment of a longitudinal shear for cutting a metallic ribbon according to the present invention;

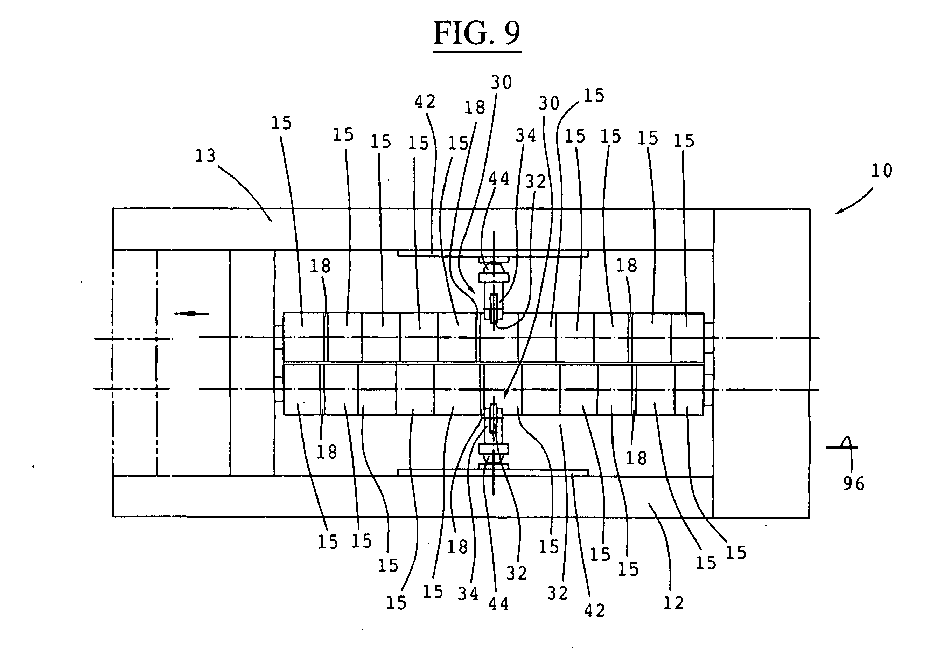

figure 9 is a partially schematic raised frontal view of the longitudinal shear of figure 8;

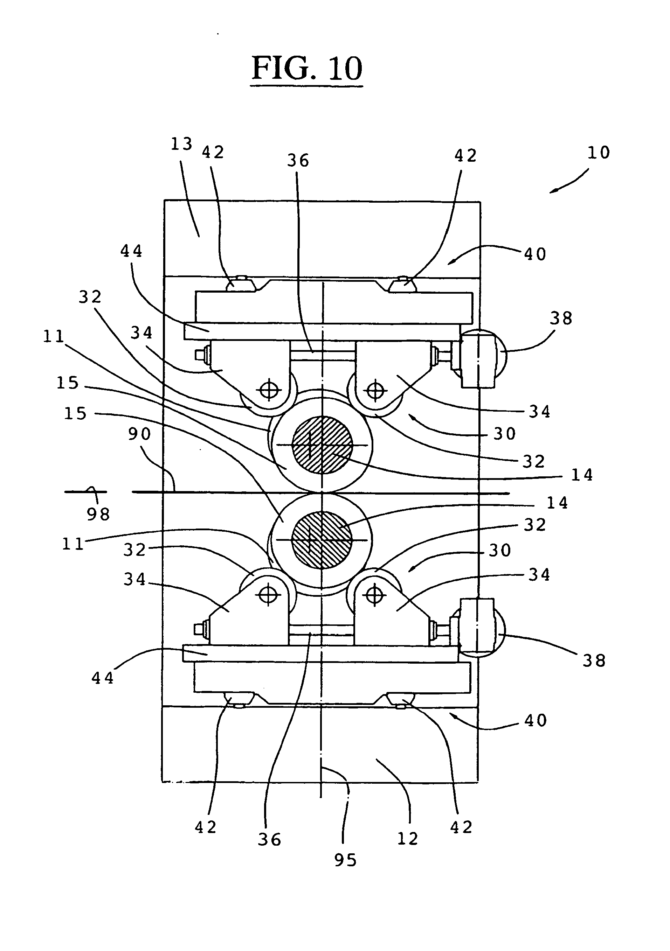

figure 10 is a schematic partially sectioned raised lateral right side view of a sixth preferred form of embodiment of a longitudinal shear for cutting a metallic ribbon according to the present invention.

With reference to the figures, it is shown a longitudinal shear 10 for cutting a metallic ribbon 90 comprising an inferior fixed structure 12, at least a couple of blades holder shafts 14 each of which is in particular provided of at least a circular blade 18, activating means able to make rotate at least a blades holder shaft 14 in such a way to determine at least a longitudinal cut of said metallic ribbon 90, and besides preferably comprising a superior structure 13.

Said longitudinal shear 10 according to the present invention comprises stiffening means 30 of at least a blades holder shaft of said at least a couple of blades holder shafts 14 which are able to support and to stiffen said at least a blades holder shaft in a substantially symmetric way respect to a vertical symmetry axis 95 of the same, in particular in proximity of said at least a circular blade 18.

Advantageously in this way it is possible to compensate the bending of said at least a blades holder shaft maintaining a reduced weight and encumbrance.

In fact in this way it is possible to stiffen, in particular in a substantially symmetric way, at least a blades holder shaft of said at least a couple of blades holder shafts 14 in proximity of each circular blade 18 avoiding advantageously the over sizing of said same at least a couple of blades holder shafts 14.

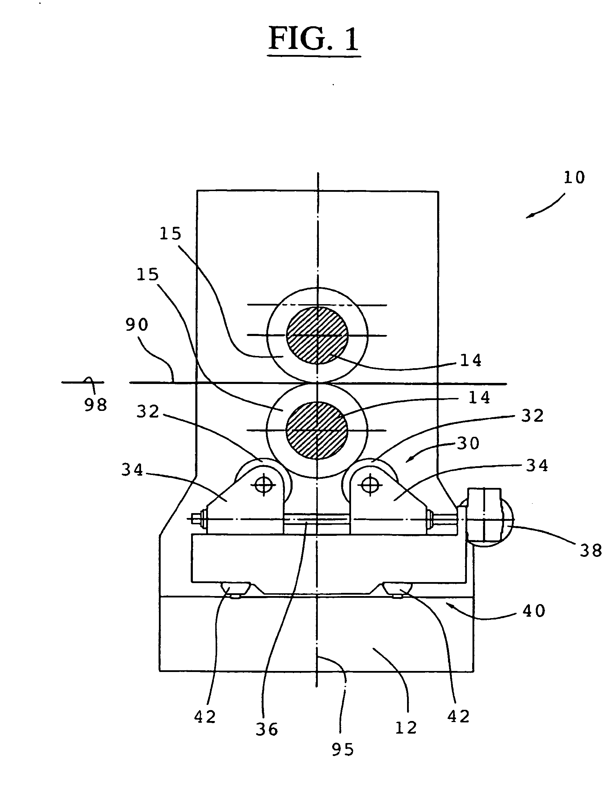

In particular said symmetry axis 95 pass for each axis of said at least a couple of blades holder shafts 14, as shown in figure 1.

Said stiffening means 30 comprise at least a couple of rolls or stiffening freewheels 32, in other terms free to rotate, and a mechanism self-centering able to support and to put in contact said couple of stiffening rolls 32 with said at least a circular blade 18 and/or with at least a spacer ring 15 mounted and constrained on said at least a blades holder shaft 14.

Said at least a couple of stiffening freewheel rolls 32 being able to stiffen and support said at least a circular blade 18 and/or said at least a spacer ring 15 in such a way to stiffen and support also consequently said at least a blades holder shaft 14 preferably in a substantially symmetric way respect to said vertical symmetry axis 95 of the same.

Advantageously this permit to replace said at least a couple of blades holder shafts 14 without need to modify said stiffening means 30 because through said mechanism self-centering it is possible to stiffen blades holder shafts with different diameters or with spacer rings 15 having different external diameters.

Preferably each stiffening roll of said at least a couple of stiffening freewheel rolls 32 comprises a coating in polymeric material in order to reduce the noisy emissions and at the same time in order to avoid wear problems in particular of each same stiffening roll 32.

In particular said mechanism self-centering comprises at least a correspondent couple of supports 34 each of which results hinged to a correspondent roll of said at least a couple of stiffening rolls 32.

According to a preferred form of embodiment said mechanism self-centering comprises a bar 36 which is coupled with said at least a couple of supports 34 through correspondent threaded portions created on the same and on replaceable portions constrained to each support 34.

This in a way to permit an easy approach or moving away of said at least a correspondent couple of supports 34 and consequently of said at least a couple of rolls 32.

Preferably said longitudinal shear 10 comprises fixing means in particular of releasable type coupled or in particular integral with said mechanism self-centering in such a way to fix in a working position said stiffening means 30.

Advantageously in this way it is also possible to balance the longitudinal shear stresses in particular in the case of a metallic ribbon 90 having a big thickness.

In particular said longitudinal shear 10 comprises positioning means 40 which connect said stiffening means 30 to said fixed structure 12 or to said superior structure 13 of said longitudinal shear 10.

This in such a way to compensate in an accurate and precise manner the bending of said blades holder shaft 14 achieving consequently an optimum control of the penetration depth of said at least a circular blade 18.

Preferably said positioning means comprises at least a couple of transversal guides 42.

This in such a way to move transversally said stiffening means 30 along a transversal direction 96 in order to position the same in proximity of said at least a circular blade 18.

Preferably said longitudinal shear 10 comprises electronic means of control and regulation of the bending of at least a blades holder shaft of said plurality of blades holder shafts 14 in particular associated to said stiffening means 30.

According to a preferred form of embodiment said electronic means of control and regulation comprise at least a stress sensor, which in particular a load cell, connected to said stiffening means 30 and in particular connected to at least a stiffening roll of said at least a couple of stiffening rolls 32.

According a preferred form of embodiment said electronic means of control and regulation comprise at least a position sensor in particular associated to said mechanism self-centering.

In particular said electronic means of control and regulation comprise second activating means preferably electric connected to said mechanism self-centering.

Preferably said second activating means preferably electric are connected to said bar 36 which rotating approach or move away said at least a couple of supports 34.

According to a preferred form of embodiment said longitudinal shear 10 comprises a plurality of eccentric supports 11 for a plurality of support bearings of said at least a couple of blades holder shafts 14.

Advantageously this permit to sharpen said at least a couple of circular blades 18, maintaining a same feeding plane 98 of said metallic ribbon 90.

According to a preferred form of embodiment said longitudinal shear 10 comprises at least a couple of longitudinal guides 44 which are coupled or in particular integrated with said stiffening means 30.

In particular said at least a couple of longitudinal guides 44 is connected to said at least a couple of transversal guides 42 and besides said at least a couple of longitudinal guides 44 is connected or in particular integrated with said mechanism self-centering.

This in such a way to move transversally said stiffening means 30 along a longitudinal direction 97 in order to position in particular in a substantially symmetric way said at least a couple of stiffening rolls 32 respect to said at least a blades holder shaft 14.

In particular said at least a couple of longitudinal guides 44 cooperating with said mechanism self-centering permit to position symmetrically said at least a couple of stiffening rolls 32 respect to said vertical symmetry axis 95 of said at least a blades holder shaft 14.

Advantageously this is possible also in the case in which said longitudinal shear 10 comprising a plurality of eccentric supports 11 for a plurality of support bearings of said at least a couple of blades holder shafts 14.

Advantageously a longitudinal shear 10 according to the present invention permit an optimum control of the penetration depth of said at least a couple of circular blades 18 determining an optimum quality of the cut of said metallic ribbon 90.

Besides advantageously controlling the bending of the blades holder shafts it is possible to control the penetration depth of the circular blades, reducing drastically the wear of the same.

This consequently determines lower costs of sharpening and lower service costs, other than a greater reliability of said longitudinal shear.

Besides the presence of the transversal 42 and longitudinal 44 guides, and of said mechanism self-centering permit to obtain a longitudinal shear more versatile because permit to replace the spacer rings 15 and the circular blades 18, with others having different diameters, besides it permit to sharpen said circular blades 18 several times, maintaining always a good control of the bending of said blades older shafts 14.

Besides in the case of a longitudinal shear provided with eccentrics 11 advantageously it is also possible to maintain the same feeding plane 98 of said metallic ribbon 90.

In this way it has been seen that a longitudinal shear for cutting a metallic ribbon according to the present invention achieves the objectives previously mentioned.

The longitudinal shear for cutting a metallic ribbon of the present invention thus conceived can undergo to numerous modifications and variations, all included in the same inventive concept.

Furthermore, in practice the materials used, as well as their dimensions and the components, can vary according to the technical needs.

## Claims

1. Longitudinal shear (10) for cutting a metallic ribbon (90) comprising an inferior fixed structure (12), at least a couple of blades holder shafts (14) each of which is in particular provided of at least a circular blade (18), activating means able to make rotate at least a blades holder shaft (14) in such a way to determine at least a longitudinal cut of said metallic ribbon (90), and preferably comprising a superior structure (13), said shear (10) comprising stiffening means (30) of at least a blades holder shaft of said at least a couple of blades holder shafts (14) which are able to support and to stiffen said at least a blades holder shaft preferably in a substantially symmetric way respect to a vertical symmetry axis (95) of the same in particular in proximity of said at least a circular blade (18), said stiffening means (30) comprises at least a couple of rolls or stiffening freewheels (32), in other terms free to rotate, and a mechanism able to support and to put in contact said couple of stiffening rolls (32) with said at least a circular blade (18) and/or with at least a spacer ring (15) mounted and constrained on said at least a blades holder shaft (14), said at least a couple of stiffening freewheel rolls (32) being able to stiffen and support said at least a circular blade (18) and/or said at least a spacer ring (15) in such a way to stiffen and support also consequently said at least a blades holder shaft (14) in a substantially symmetric way respect to said vertical symmetry axis (95) of the same, **characterizing in that** said longitudinal shear (10) comprises electronic means of control and regulation of the bending of at least a blades holder shaft of said plurality of blades holder shafts (14) associated to said stiffening means (30) and in which said mechanism is a self-centering mechanism and through said self-centering mechanism is possible to stiffen blades holder shafts (14) with different diameters or with spacer rings (15) having different external diameters, advantageously this permit to replace said at least a couple of blades holder shafts (14) without need to modify said stiffening means (30).

2. Longitudinal shear (10) according to claim 1, **characterized in that** said mechanism self-centering comprises at least a correspondent couple of supports (34) each of which results hinged to a correspondent roll of said at least a couple of stiffening rolls (32).

3. Longitudinal shear (10) according to claim 2, **characterized in that** said mechanism self-centering comprises a bar (36) which is coupled with said at least a couple of supports (34) through correspondent threaded portions created on the same and on replaceable portions constrained to each support (34).

4. Longitudinal shear (10) according to any one of the claims from 1 to 4 3, **characterized by** comprising fixing means in particular of releasable type coupled or in particular integral with said mechanism self-centering in such a way to fix in a working position said stiffening means 30.

5. Longitudinal shear (10) according to any one of claims from 1 to 4, **characterized by** comprising positioning means (40) which connect said stiffening means (30) to said fixed structure (12) or to said superior structure (13) of said longitudinal shear (10).

6. Longitudinal shear (10) according to claim 5, **characterized in that** said positioning means (40) comprises at least a couple of transversal guides (42).

7. Longitudinal shear (10) according to claim 1, **characterized in that** said electronic means of control and regulation comprise at least a stress sensor connected to said stiffening means (30) and in particular connected to at least a stiffening roll of said at least a couple of stiffening rolls (32).

8. Longitudinal shear (10) according to claim 1, **characterized in that** said electronic means of control and regulation comprise at least a position sensor in particular associated to said mechanism self-centering.

9. Longitudinal shear (10) according to any one of the claims from 7 to 8, **characterized in that** said electronic means of control and regulation comprise second activating means preferably electric connected to said mechanism self-centering.

10. Longitudinal shear (10) according to any one of the claims from 1 to 9, **characterized by** comprising a plurality of eccentric supports (11) for a plurality of support bearings of said at least a couple of blades holder shafts (14).

11. Longitudinal shear (10) according to any one of the claims from 1 to 10, **characterized by** comprising at least a couple of longitudinal guides (44) which are coupled or in particular integrated with said stiffening means (30).

12. Longitudinal shear (10) according to claim 11, **characterized in that** said at least a couple of longitudinal guides (44) is connected to said at least a couple of transversal guides (42) and besides **in that** said at least a couple of longitudinal guides (44) is connected or in particular integrated with said mechanism self-centering.

13. Longitudinal shear (10) according to any one of the claims from 1 to 12, **characterized in that** each stiffening roll of said at least a couple of stiffening freewheel rolls (32) comprises a coating in polymeric material.

## Patentansprüche

1. Längsschere (10) zum Schneiden eines metallischen Bandes (90), umfassend eine untere feste Struktur (12), mindestens ein Paar Blatthaltewellen (14), von denen jede im wesentlichen mit mindestens einem Kreisblatt (18) versehenen ist, Aktivierungsmittel die in der Lage sind, mindestens eine Blatthaltewelle (14) so drehen zu lassen, dass sie mindestens einen Längsschnitt des besagten metallischen Bandes (90) erzeugen, und die vorzugsweise eine obere Struktur (13) aufweist, wobei die besagte Schere (10) Versteifungsmittel (30) von mindestens einer Blatthaltewelle von mindestens einem Paar Blatthaltewellen (14) umfasst, die in der Lage sind, diese mindestens eine besagte Blatthaltewelle vorzugsweise zu versteifen, vorzugsweise in einer im wesentlichen symmetrischen Art und Weise, mit Bezug auf eine vertikale Symmetrieachse (95) derselben, insbesondere in der Nähe von dem besagten mindestens Kreisblatt (18), die besagten Versteifungsmittel (30) umfassend mindestens ein Paar Rollen oder Versteifungsfreiläufe (32), die mit anderen Worten frei drehbar sind, und einen Mechanismus umfasst, der in der Lage ist, das besagte Paar Versteifungsrollen (32) zu unterstützen und in Kontakt mit dem besagten mindestens Kreisblatt (18) und/oder mit mindestens einem Distanzring zu bringen, der auf der mindestens einer besagten Blatthaltewelle (14) aufgebracht und gepresst ist, wobei mindestens ein Paar Versteifungsfreilaufrollen (32) in der Lage sind, das besagte mindestens ein Kreisblatt (18) und/oder den besagten mindestens einen Distanzring (15) so zu versteifen und unterstützen, dass sie folglich auch die besagte mindestens eine Blatthaltewelle (14), vorzugsweise in einer im wesentlichen symmetrischen Art und Weise mit Bezug auf die besagte vertikale Symmetrieachse (95) derselben zu versteifen und zu unterstützen, **dadurch gekennzeichnet, dass** die besagte Längsschere (10) elektronische Kontroll-und Regelungsmittel aufweist, um mindestens eine Blatthaltewelle der besagten Mehrheit Blatthaltewellen (14) zu biegen, die zu den besagten Versteifungsmitteln (30) zugeordnet sind, und wobei der besagte Mechanismus ein selbst-zentrierender Mechanismus ist, und durch den besagten selbst-zentrierenden Mechanismus ist es möglich, Blatthaltewellen (14) mit verschiedenen Durchmessern oder mit Distanzringen (15) zu versteifen, die verschiedene äußere Durchmesser besitzen, wobei es ist mit Vorteil möglich, mindestens das besagte Paar Blatthaltewellen (14) derart zu wechseln, dass es nicht erforderlich ist, die besagten Versteifungsmittel (30) zu verändern.

2. Längsschere (10) nach Anspruch 1, **dadurch gekennzeichnet, dass** der besagte selbst-zentrierende Mechanismus mindestens ein entsprechendes Paar Stützen (34) umfasst, von denen jeder auf einer entsprechenden Rolle dieses mindestens eines Paares Versteifungsrollen (32) gelenkig verbunden ist.

3. Längsschere (10) nach Anspruch 2, **dadurch gekennzeichnet, dass** der besagte selbst-zentrierende Mechanismus eine Stange (36) umfasst, die mit dem besagten mindestens einem Paar Stützen (34) gekoppelt ist, mittels entsprechender Gewindeabschnitte, die auf dieselben und auf austauschbare Abschnitte erzeugt werden, die an jedem Träger (34) eingeschränkt sind.

4. Längsschere (10) nach jedem der Ansprüche 1 bis 3, **dadurch gekennzeichnet, dass** sie Befestigungsmittel, insbesondere der lösbaren Art umfasst, die mit dem besagten selbst-zentrierenden Mechanismus derart gekoppelt oder insbesondere integriert sind, dass sie in einer Arbeitslage solche Versteifungsmittel befestigen.

5. Längsschere (10) nach jedem der Ansprüche 1 bis 4, **dadurch gekennzeichnet, dass** sie Positionier-Mittel (40) umfasst, die die besagten Versteifungsmittel (30) mit der besagten festen Struktur (12) oder mit der besagten oberen Struktur (13) der besagten Längsschere (10) verbinden.

6. Längsschere (10) nach Anspruch 5, **dadurch gekennzeichnet, dass** die besagten Positionier-Mittel (40) mindestens ein Paar Querführungen (42) umfassen.

7. Längsschere (10) nach Anspruch 1, **dadurch gekennzeichnet, dass** die besagten elektronischen Kontroll-und Regelungsmittel mindestens einen Spannungssensor umfassen, der mit der besagten Versteifungsmitteln (30) verbunden ist und insbesondere mit mindestens einer Versteifungsrolle des besagten mindestens eines Paares Versteifungsrollen (32) verbunden sind.

8. Längsschere (10) nach Anspruch 1, **dadurch gekennzeichnet, dass** die besagten elektronischen Kontroll-und Regelungsmitteln mindestens einen Lagesensor umfassen, der insbesondere dem besagten selbst-zentrierenden Mechanismus zugeordnet ist.

9. Längsschere (10) nach einem der Ansprüche 7 bis 8, **dadurch gekennzeichnet, dass** die besagten elektronischen Kontroll-und Regelungsmittel zweite vorzugsweise elektrische Aktivierungsmittel umfassen, die mit dem besagten vorzugsweise selbst-zentrierenden Mechanismus verbunden sind.

10. Längsschere (10) nach einem der Ansprüche 1 bis 9, **dadurch gekennzeichnet, dass** sie eine Mehrheit exzentrische Stützen (11) für eine Mehrheit von Stützlagern des besagten mindestens eines Paares Blatthaltewellen (14), umfassen.

11. Längsschere (10) nach einem der Ansprüche 1 bis 10, **dadurch gekennzeichnet, dass** sie mindestens ein Paar Längsführungen (44) umfasst, die mit den besagten Versteifungsmitteln gekoppelt oder insbesondere integriert sind.

12. Längsschere (10) nach Anspruch 11, **dadurch gekennzeichnet, dass** das besagte mindestens ein Paar Längsführungen (44) mit dem besagten mindestens einem Paar Querführungen (42) verbunden ist, und außerdem, dass das besagte mindestens ein Paar Längsführungen (44) mit dem besagten mindestens selbst-zentrierenden Mechanismus verbunden oder insbesondere integriert ist.

13. Längsschere (10) nach einem der Ansprüche 1 bis 12, **dadurch gekennzeichnet, dass** jede Versteifungswalze des besagten mindestens eines Paares Versteifungsfreilaufrollen (32) eine Beschichtung aus Polymer-Materials umfasst.

## Revendications

1. Cisaille longitudinale (10) pour couper un ruban métallique (90) comprenant une structure inferieure fixe (12), au moins un couple d'arbres porte-lames (14) chacun desquels est en particulier pourvu d'au moins une lame circulaire (18), avec des moyens d'activation capables de faire tourner au moins un arbre (14) porte-lames (14) de manière à déterminer au moins une coupe longitudinale dudit ruban métallique (90), et comprenant de préférence une structure supérieure (13), la dite cisaille (10) comprenant des moyens de raidissement (30) d'au moins un arbre porte-lames dudit au moins un couple d'arbres porte-lames (14) qui sont capables de supporter et raidir le dit au moins un arbre porte-lames de préférence d'une façon substantiellement symétrique avec référence à son axe de symétrie (95) vertical, en particulier en proximité de cette au moins une lame circulaire (18), les dits moyens de raidissement (30) comprenant au moins un couple de rouleaux où de roues libres (32) de raidissement, en d'autres termes libres de tourner, et un mécanisme capable de supporter et mettre en contact ledit couple de rouleaux de raidissement (32) avec ladite au moins une lame circulaire (18) et/ou avec au moins une bague entretoise (15) montée et forcée sur au moins un arbre porte-lames (14), ledit au moins un couple de rouleaux de raidissement (32) à roue libre étant capable de raidir et supporter ladite au moins lame circulaire (18) et/ou ladite au moins bague entretoise (15), en manière de raidir et supporter aussi en conséquence au moins un arbre porte-lames (14), dans une manière substantiellement symétrique avec référence au dit axe de symétrie (95) vertical de celui-ci, **caractérisé en ce que** ladite cisaille longitudinale (10) comprend des moyens électroniques de contrôle et réglage de la flexion d'au moins un arbre porte-lames de ladite pluralité d'arbres porte-lames (14) associés au dits moyens de raidissement (30), et dans laquelle ledit mécanisme est un mécanisme d'auto-centrage et par ledit mécanisme d'auto-centrage il est possible de raidir des arbres porte-lames (14) avec des différents diamètres ou avec des bagues entretoise (15) ayant des diamètres extérieurs différents, ce qui permit avantageusement de substituer ledit au moins couple d'arbres porte-lames (14) sans devoir modifier lesdits moyens de raidissement (30).

2. Cisaille longitudinale (10) selon la revendication 1, **caractérisée en ce que** ledit mécanisme de préférence d'auto-centrage comprend au moins un couple correspondant de supports (34), chacun desquels est articulé à un correspondant rouleau dudit au moins un couple de rouleaux de raidissement (32).

3. Cisaille longitudinale (10) selon la revendication 2, **caractérisée en ce que** ledit mécanisme d'auto-centrage comprend une barre (36) couplée avec ledit au moins un couple de supports (34) par des correspondants pièces filetées créées sur le même et sur des pièces remplaçables forcées contre chaque support (34).

4. Cisaille longitudinale (10) selon une quelconque des revendications 1 à 3, **caractérisée en ce qu'**elle comprend des moyens de fixation en particulier du type libérable, couplés ou en particulier intégrés avec le mécanisme d'auto-centrage, de telle manière à fixer lesdits moyens de raidissement 30 dans une position de travail.

5. Cisaille longitudinale (10) selon une quelconque des revendications 1 à 4, **caractérisée en ce qu'**elle comprend des moyens de positionnement (40) qui relient lesdits moyens de raidissement (30) à ladite structure fixée (12) ou à ladite structure supérieure (13) de ladite cisaille longitudinale (10).

6. Cisaille longitudinale (10) selon la revendication 5, **caractérisée en ce que** lesdits moyens de positionnement (40) comprennent au moins un couple de guides transversaux.

7. Cisaille longitudinale (10) selon la revendication 1, **caractérisée en ce que** lesdits moyens électronique de contrôle et réglage comprennent au moins un capteur de contrainte relié aux dits moyens de raidissement (30) et en particulier relié au moins à un rouleau de raidissement dudit au moins un couple de rouleaux de raidissement (32).

8. Cisaille longitudinale (10) selon la revendication 1, **caractérisée en ce que** lesdits moyens électroniques de contrôle et réglage comprennent au moins un capteur de position en particulier associé au dit mécanisme d'auto-centrage.

9. Cisaille longitudinale (10) selon une quelconque des revendications 7 à 8, **caractérisée en ce que** lesdits moyens électroniques de contrôle et réglage comprennent des seconds moyens d'activation de préférence électriques, reliés aux dit mécanisme d'auto-centrage.

10. Cisaille longitudinale (10) selon une quelconque des revendications 1 à 9, **caractérisée en ce qu'**elle comprend une pluralité de supports excentriques (11) pour une pluralité de paliers de support dudit au moins un couple d'arbres porte-lames (14).

11. Cisaille longitudinale (10) selon une quelconque des revendications 1 à 10, **caractérisée en ce qu'**elle comprend au moins un couple de guides longitudinaux (44) qui sont couplés ou en particulier intégrés avec lesdits moyens de raidissement (30).

12. Cisaille longitudinale (10) selon la revendication 11, **caractérisée en ce qu'**au moins un couple de guides longitudinaux (44) est relié audit au moins un couple de guides transversaux (42), et en outre **en ce qu'**au moins un couple de guides longitudinaux (44) est relié ou en particulier intégré avec ledit mécanisme d'auto-centrage.

13. Cisaille longitudinale (10) selon une quelconque des revendications 1 à 12, **caractérisée en ce que** chaque rouleau de raidissement dudit au moins un couple de rouleaux de raidissement (32) à roue libre comprend un revêtement en matériau polymère.
